# EUROPEAN PATENT APPLICATION

(11) **EP 3 319 021 A1**
(43) Date of publication of application: **09.05.2018**
(21) Application number: 17199918.8
(22) Date of filing: 03.11.2017
(51) Int. Cl.: G06Q 10/04

(54) **RESOURCE OPTIMIZATION IN INFORMATION HANDLING**

(30) Priority: 04.11.2016 SE 1651457
(71) Applicant: Zacco A/S, 2900 Hellerup (DK)
(72) Inventor: UGGLA, Niclas, 741 96 Knivsta (SE)
(74) Representative: Zacco Sweden AB

(57) **Abstract**

The disclosure relates to methods for resource optimization in information handling. The method comprises obtaining (S10), from at least one data base, information relating to a set patent applications filed at a regional patent office that have received an allowed status within a selected time period. The obtained information, for each patent application, comprises an allowed date. The method further comprises calculating (S20), for each patent application, renewal fee costs for a set of options based on the obtained information and a set of countries selected to obtain patent protection in wherein the set of options comprises a first option to pay renewal fees at the national patent offices in the selected set of countries and a second option to pay a renewal fee at a regional patent office. The method also comprises comparing (S30) the options with each other based on the calculated renewal fee costs. The method additionally comprises determining (S40) a date to perform actions based on the comparison of the options with each other. The disclosure also relates to corresponding computer programs.

## Description

### TECHNICAL FIELD

The present disclosure relates to methods for providing resource optimization in information handling.

### BACKGROUND

Intellectual property, IP, rights have gotten more and more important for corporations over the past few decades and typically constitute an increasing amount of the value of the corporation. For large technology-driven corporation, patents typically constitute one of the most important intellectual property rights of the corporation. For many corporations, it is often convenient to outsource parts or all of the patent prosecution handling to representatives, e.g. due to lack of in-house specialists or people eligible to represent applicants within the jurisdiction in which a patent is to be filed. During the prosecution process, communication is taking place between an applicant, typically a corporation, and a patent office. In case the applicant is represented by one or more representatives, the communication goes through, and is often evaluated and processed by, the representative(s). Much communication received from a patent office requires an action to be taken by the applicant, for instance responding to an office action or paying a fee. Communications requiring actions are typically associated with due dates, setting time frames for when the actions have to be carried out, often with severe consequences if not observed. There is a long felt need in the art for systems and methods that would reduce or eliminate the risk associated with "the human factor" of making mistakes, for instance missing a due date. Furthermore, the time frames of the issued communications places strict demands on an optimal flow of information. Much time is typically required to coordinate resources in order to process the information and take action based on the information. There is a need in the art for methods and systems that facilitate efficient and robust information processing for determining which further action to take.

### SUMMARY

An object of the present disclosure is to provide methods and computer programs which seeks to mitigate, alleviate, or eliminate one or more of the above-identified deficiencies in the art and disadvantages singly or in any combination and to provide methods and computer programs for implementing resource optimization in information handling.

This object is obtained by a method for resource optimization in information handling. The method comprises obtaining, from at least one data base, information relating to a set patent applications filed at a regional patent office that have received an allowed status within a selected time period. The obtained information, for each patent application, comprises an allowed date. The method further comprises calculating, for each patent application, renewal fee costs for a set of options based on the obtained information and a set of countries selected to obtain patent protection in, wherein the set of options comprises a first option to pay renewal fees at the national patent offices in the selected set of countries and a second option to pay a renewal fee at a regional patent office. The method also comprises comparing the options with each other based on the calculated renewal fee costs. The method additionally comprises determining a date to perform actions based on the comparison of the options with each other.

By enabling an information link directly between an applicant of a patent and at least one data base having information provided by a patent office responsible for handling the patent application associated with the patent, a redundancy is provided with respect to a communication link wherein most or all communication between the applicant and the patent office occurs via a representative.

Furthermore, by obtaining the information directly from one or more data bases, the information is guaranteed to match that held by the patent office, thereby eliminating the risk associated with human error. Important information, such as dates, is immediately and accurately obtained. By obtaining the information immediately, instead of having to wait for a communication to be received (which may take days), the available time frame between access of the information and the due date when an action has to be taken may be increased. The longer time frame before an action has to be taken opens up options and the possibility of analysing those options that are practically unattainable if all information is handled by humans. In particular, large data sets may be processed quickly and accurately, in contrast to being processed by humans by a divide-and-conquer strategy, which would increase the probability of human error as the number of humans involved grows.

According to some aspects, calculating renewal fee costs comprises calculating, for each patent application, a set of parameters based on the obtained information.

According to some aspects, the set of parameters comprises a next anniversary date, AD, number of days from allowed date to the anniversary date and a response due date.

According to some aspects, the set of parameters comprises a next renewal year for which renewal fees are due for the application.

The calculated set of parameters reduces the time needed to explore different options of how to proceed. The immediate availability of the set of parameters opens up the possibility for actions that would typically be practically unavailable due to the time it would take to examine them. In particular, the set of parameters comprising a next anniversary date, number of days from allowed date to the anniversary date and a response due date enables comparing different response options and proceed with the option resulting in the lowest total cost.

According to some aspects, the method further comprises determining the date to perform actions to be the response due date when the anniversary date is within a first time interval of the allowed date.

According to some aspects, the first time interval is less than sixty days.

The average time from filing a response to publication of a granted patent will depend on when the response is filed. By performing actions well before the response due date, there is enough time for a Communication pursuant to Article 97(1) EPC of the European Patent Convention, EPC, to be issued and translation of allowed claims to be filed before having to pay next year's renewal fees. Choosing the first time interval to be less than sixty days takes into account the typical handling time of the Communication pursuant to Article 97(1) EPC at the European Patent Office, EPO, as well as typical times for arranging translations as well as approving the text intended for grant.

According to some aspects, the method further comprises comparing the determined date to perform actions and the response due date, and establishing an updated response due date based on the comparison.

According to some aspects, the method further comprises determining a set of actions based on the updated response due date.

According to some aspects, obtaining information further comprises retrieving data from the at least one data base, the data comprising the information.

According to some aspects, determining a date to perform actions further comprises subtracting thirty-seven days from the AD, and adjusting the date to perform actions to be the previous Monday with respect to the date determined by subtracting thirty-seven days from the AD.

According to some aspects, determining a date to perform actions further comprises subtracting thirty-six days from the AD, and adjusting the date to perform actions to be the next Tuesday with respect to the date determined by subtracting thirty-six days from the AD.

The present disclosure also relates to a computer program comprising computer program code which, when executed, causes a computer arranged to be in communication with at least one data base, wherein the at least one data base comprises information relating to a set patent applications filed at a regional patent office that have received an allowed status within a selected time period, to execute the methods disclosed above and below.

### BRIEF DESCRIPTION OF THE DRAWINGS

Figure 1 is a flow chart that illustrates the method steps performed when implementing resource optimization in information handling according to the present disclosure.
Figure 2 is a flow chart that illustrates an embodiment of the present disclosure.
Figure 3 is a flow chart that illustrates aspects of method steps of Fig. 2 in more detail.

### DETAILED DESCRIPTION

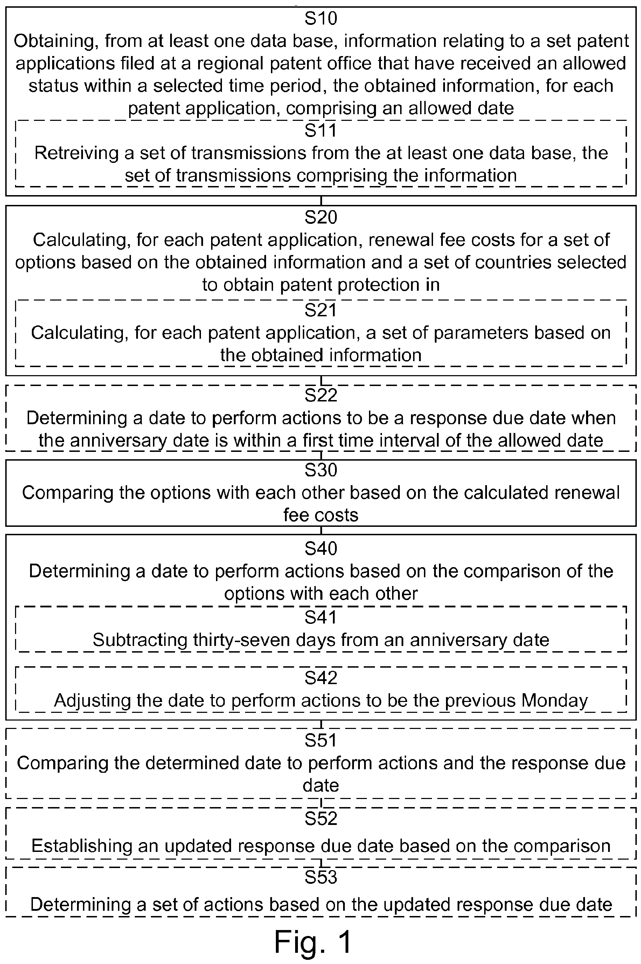

Figure 1 is a flow chart that illustrates the method steps performed when implementing resource optimization in information handling according to the present disclosure. To further facilitate understanding of the method steps, the method will be illustrated when a patent application has received an allowed status, indicated by an official Communication pursuant to Rule 71(3) EPC of the European Patent Convention, EPC, indicating an intention to grant, which has been issued by a regional patent office, such as the European Patent Office, EPO.

Traditionally, the EPO issues a communication in the form of a letter sent to the applicant or, perhaps more commonly, a representative of the applicant. In the case of sending the letter to a representative, the representative typically communicates with the applicant regarding the contents and discusses possible actions in response to the contents of the communication. During this process, there are several sources that may adversely affect the process. For instance, the letter could be delayed or get lost during delivery. In the interface between representative and applicant human factors could introduce additional problems, e.g. in the form of incorrect information or forwarding information late or not at all.

The EPO maintains a register over patent applications, the European Patent Register, which enables users to access official information of patent applications over a web-interface. According to an aspect of the invention, a database of the EPO comprising information presented in the European Patent Register is accessed to reduce or eliminate the above-mentioned sources of problems.

More specifically, the method comprises selecting one or more applicants. The selection of a subset of applicants of everyone available reduces the subsequent amount of data which need to be processed in order to extract the data of interest. As illustrative examples, the selected applicant(s) may be the applicant itself, e.g. if the method is performed by an applicant, or a set of one or more applicants represented by a representative, e.g. if the method is performed by the representative of the one or more applicants. However, all applications for a specific applicant can be reviewed by anybody, and hence the method is not limited to be performed by either an applicant or a representative of an applicant.

Having selected the one or more applicants, the method comprises obtaining information relating to a set of European patent applications of the one or more applicants that have received a Communication pursuant to Rule 71(3) EPC. The information is obtained from at least one data base. In other words, the obtained information, for each patent application, comprises an allowed date. In principle, the steps of retrieving data and selecting the one or more applicants could be reversed, but selecting applicants before retrieving the data significantly reduces the total amount of data that has to be processed, which in turn reduces the necessary available processing power.

The method further comprises selecting a time interval and determining a subset of the European patent applications having the Communication pursuant to Rule 71(3) EPC issued within the time interval. The steps of retrieving data relating to European patent applications, selecting a time interval and determining a subset may be performed essentially simultaneously if the database from which the data is retrieved is configured to allow it. For instance, a request may be made to the database to provide the data relating to European patent applications of the one or more applicants subject to the Communication pursuant to Rule 71(3) EPC issued in the respective applications being issued within the time interval.

To sum up, the method comprises obtaining S10, from at least one data base, information relating to a set patent applications filed at a regional patent office that have received an allowed status within a selected time period. The obtained information, for each patent application, comprises an allowed date. The set of patent applications may be pending European patent applications at the EPO. Obtaining S10 the information may further comprise retrieving S11 data from the at least one data base, the data comprising the information.

In an alternative embodiment, data is transmitted from the data base to a receiving party carrying out the method without the transmission being prompted by a request for the data. In other words, the transfer of data from the data base may be configured as a "push"-operation instead of a "pull"-operation, wherein "retrieving" as described above being an example of the latter. An example of implementation where the transmission of data takes place without an explicit request would be a subscription, wherein data is provided automatically.

It does not matter for the disclosed method if the data is provided with a "push"- or a "pull"-operation, only that the necessary data is obtained from the at least one data base. The selected time period may thus also be stated explicitly, e.g. as part of a request or as part of a filter when determining a subset, or implicitly, e.g. a time period determined by a subscription. In one example, the data base provides subscription data every time a Communication pursuant to Rule 71(3) EPC is issued, thereby implicitly defining the selected time interval to be between the last two subscription data transmissions.

The ability to obtain the information relating to the set of patent applications almost as soon as it becomes available enables the possibility of processing the information further away from any response due date, which in turn opens up options of acting in response to the available information that were not practically available prior to the present disclosure. In addition to the technical effects and advantages already described, in particular the fact that accurate information is available to a user of the disclosed method as soon as it is generated, the disclosed methods may be further used to estimating possible savings in next renewal fees, as will be illustrated further below. The enabling of estimating possible savings in next renewal fees is a significant advantage of the disclosed method, an advantage that cannot be realized practically by manual labour by a set of humans, e.g. using a divide-and-conquer strategy to process the available information.

In order to estimate possible savings in next renewal fees, the next renewal fee for a set of selected Member States, MS, and the EPO has to be calculated S20 for each European patent application. The renewal fees depend on the renewal year for which they apply. It may thus be advantageous to speed up the process to grant of the patent by taking appropriate action. Therefore, according to some aspects, calculating S20 renewal fee costs comprises calculating S21, for each patent application, a set of parameters based on the obtained information. The set of parameters preferably comprises a next anniversary date, AD, the number of days between the allowed date and the AD, and an office action, OA, due date, i.e., a response due date, with the option of ten additional days according to Rule 126(2) EPC. The set of parameters preferably also comprises a next renewal year for which renewal fees are due for the application. The OA due date is the due date of the Communication pursuant to Rule 71(3) EPC and is determined by ten days plus four months from the allowed date. The four months are specified by the EPO according to Rule 132 EPC and the ten days if for calculating notification by postal services and is determined by Rule 126(2) EPC. Knowing the number of days between the allowed date and the AD enables estimating if there is enough time to speed up the process to grant of the patent such that the patent is granted before the AD. Such an estimate may be determined as follows.

The average time it takes from filing a response to the Communication pursuant to Rule 71(3) EPC to publication of the granted patent vary depending on when the response is filed. Tasks associated with responding to the Communication pursuant to Rule 71(3) EPC as well as the handling time of the response by the EPO have to be taken into consideration.

If a response is filed on a Monday and a decision is made by the EPO to grant a patent, a Communication pursuant to Article 97(1) EPC is issued ten days later. However, if a response is filed on a Tuesday, a Communication pursuant to Article 97(1) EPC is issued sixteen days later. The reason for this is that Communications pursuant to Article 97(1) EPC are issued only on Thursdays. The principles disclosed herein are however not limited by this and the specific dates are only used to illustrate potential consequences of filing a response on different dates and how the consequences may be used in downstream information processing. In the Communication pursuant to Article 97(1) EPC it is indicated which day the granted patent will be published. This date is, with some exceptions, twenty-seven days from issuing of the Communication pursuant to Article 97(1) EPC, which is a Wednesday. Thus, in total, the handling time at the EPO may typically vary between thirty-seven and forty-three days.

When responding to a Communication pursuant to Rule 71(3) EPC, it is also necessary to file translations of the allowed claims in the official languages of the EPC for which translations are missing. For instance, if a set of claims have been allowed in English, then French and German translations of the claims need to be provided. It is also necessary to approve of the text intended for grant. The time it takes to complete these tasks will also have to be taken into consideration when deciding on which actions to take. For instance, if these tasks are expected to take at least nineteen to twenty-one days to complete, the time span including the handling time at the EPO and completing the tasks necessary for responding to the Communication pursuant to Rule 71(3) EPC will typically take between fifty-six and sixty-four days. Thus, in this example, an action to speed up the grant process needs to be taken at least between fifty-six and sixty-four days before the anniversary date to have the intended effect, otherwise the response due date is taken as the date to perform actions. In other words, the method further comprises determining S22 the date to perform actions to be the response due date when the anniversary date is within a first time interval of the allowed date. The first time interval may be a compromise between the two extremes of fifty-six and sixty-four days. For instance, the first time interval may be less than sixty days.

The options that are available if the anniversary date is not within the first time interval of the allowed date, i.e. if it is deemed to be enough time to take an action resulting in a grant of a patent before the anniversary date of the patent application, will now be described.

If the number of days from the allowed date to the anniversary date is greater than the first interval, it is necessary to select EP Member States to validate each European application in. The reason for this step is to provide a parameter needed to estimate possible savings in next renewal fee. The theory is rather simple; if the applicant chooses to validate in few MS, approximately one to six, then it is beneficial to pay next renewal fee to national patent offices instead of paying to the EPO. On the other hand, if the applicant chooses to validate in many MS, approximately more than ten MS, then it is beneficial to pay next renewal fee to the EPO instead of national patent offices. When the applicant chooses between six and ten MS there is probably not much gained to change the normal procedure, but this depends on which MS that are selected.

To sum up, the method also comprises calculating S20, for each patent application, renewal fee costs for a set of options based on the obtained information and a set of countries selected to obtain patent protection in, wherein the set of options comprises a first option to pay renewal fees at the national patent offices in the selected set of countries and a second option to pay a renewal fee at a regional patent office.

In order to determine a suitable date to file the response to the Communication pursuant to Rule 71(3) EPC, the next renewal fee for the selected MS and the EPO has to be calculated. This may be achieved by accessing the EPO homepage and retrieving current renewal fees for the next renewal fee year. The sum of the next renewal fees for all selected MS is also compiled.

The sum of the next renewal fees for all selected MS is compared to the fee for the next renewal year at the EPO. The result from the comparison is used to determine a best option on where to pay the next renewal fee based on AD, renewal fees for EPO and selected MS, and to calculate a recommended due date. In other words, the method further comprises comparing S30 the options with each other based on the calculated renewal fee costs.

The recommended response due date when the sum of the next renewal fees for all selected MS is less than the fee for the next renewal year at the EPO has to be early enough to ensure that the granted patent is published before the AD. Similarly, The recommended response due date when the sum of the next renewal fees for all selected MS is greater than the fee for the next renewal year at the EPO has to be late enough to ensure that the granted patent is published after the AD. In other words, the method additionally comprises determining S40 a date to perform actions based on the comparison of the options with each other.

However, the response due date may not enable a response to be filed on the recommended response due date. For instance, if the recommended response due date is after the response due date dictated by the Communication pursuant to Rule 71(3) EPC, it is not possible to wait until the recommended response due date (without consequences). Thus, according to some aspects, the method further comprises comparing S51 the determined date to perform actions and the response due date, and establishing S52 an updated response due date based on the comparison.

With each updated response due date, there is at least one associated action. For instance, if it is desirable to speed up the granting process and the comparison between the determined date to perform actions and the response due date indicates that the response due date is after the recommended due date, a response may be filed (the action) on or before the recommended due date (the updated response due date; here - the same as the determined date to perform actions). Likewise, if it is desirable to speed up the granting process and the comparison between the determined date to perform actions and the response due date indicates that the response due date is before the recommended due date, a response may be filed (the action) on or before the response due date (the updated response due date; here - the response due date). In other words, the method further comprises determining S53 a set of actions based on the updated response due date. The actions typically comprise filing a response in accordance with the calculated recommended due date.

The disclosure also relates to a computer program comprising computer program code which, when executed, causes a computer arranged to be in communication with at least one data base, wherein the at least one data base comprises information relating to a set patent applications filed at a regional patent office that have received an allowed status within a selected time period, to execute the methods disclosed above and below.

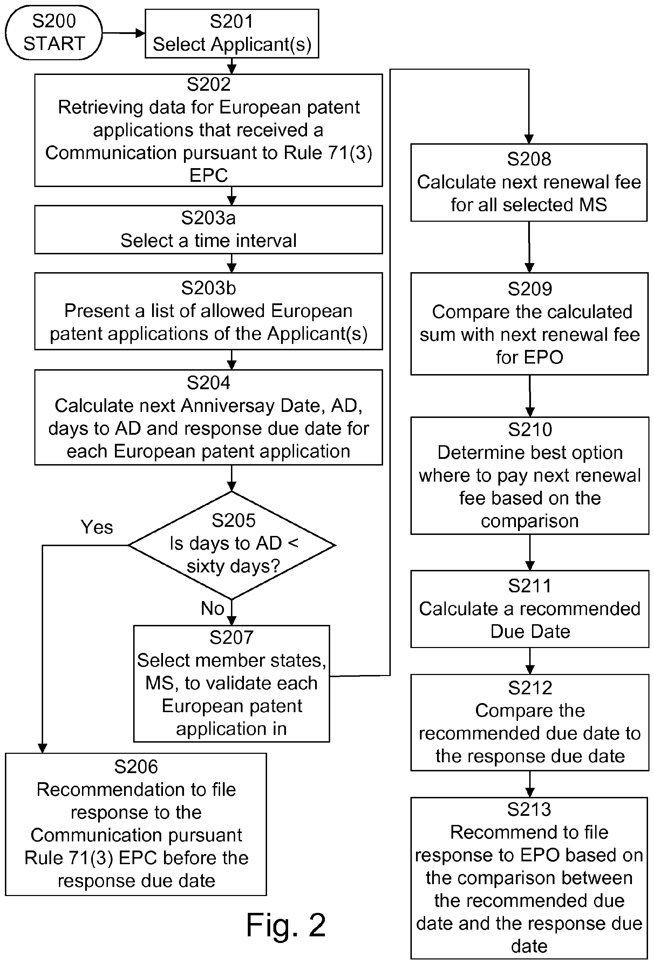

Figure 2 is a flow chart that illustrates an embodiment of the present disclosure. As a first step, one or more applicants, e.g. a single applicant "Applicant A", are selected S201. Data from a data base at the EPO is retrieved S202 with the selection criteria that a Communication pursuant to Rule 71(3) EPC has been issued in European patent applications where "Applicant A" is the applicant. The retrieval of data may be controlled by a computer program, executed in a computer having a communication channel with the data base at the EPO. The computer program may be arranged to take one or more applicants as an input and retrieve the data from the database based on the input and the selection criteria.

A time interval of sixty days is then selected S203a and a list of allowed European patent applications for Applicant A is presented S203b. The purpose of the time interval is to enable filtering out European patent applications having received Communications pursuant to Rule 71(3) EPC with an allowed date sufficiently far away from the next anniversary date, AD, that it is possible to accelerate the process of granting the patent enough to get the granted patent published before the next anniversary date. The duration of the interval is a compromise between the time EPO is expected to handle the application up to publication of the granted patent and how long it would take for the applicant or a representative to perform additional actions necessary to result in the grant of the patent.

The next steps will be to determine which, if any, of the European patent applications for which the AD is sufficiently far away to allow the actions necessary to accelerate the grant process. Thus, for each European patent application, the next anniversary date, the number of days to the next anniversary date and the response due date for the Communication pursuant to Rule 71(3) EPC are calculated S204. The next anniversary date is calculated based on the filing date of the respective application. The number of days to the next anniversary date is calculated as the time difference between the next anniversary date and the allowed date. Both the allowed date and the response due date are based on the Communication pursuant to Rule 71(3) EPC.

Once the number of days to the next anniversary date is calculated, it is determined S205 if the next AD is within the time interval of sixty days. If the next AD is within the time interval, i.e. the number of days to the next AD is less than sixty days, then it is deemed that there is not sufficient time to accelerate the grant of the patent and it is recommended S206 to file a response to the Communication pursuant to Rule 71(3) EPC before its due date.

If the next AD is not within the time interval of sixty days, it becomes necessary to explore the possible options available. As a first step and for each European patent application, a set of Member States, MS, is selected S207 to validate in. By selecting the MS, different payment options may be explored and the best option to e.g. minimize renewal fees may be identified.

For each European patent application, the sum of the renewal fees for all selected MS is calculated S208 and compared S209 with the next renewal fee for EPO. The result from the comparison is used to determine S210 a best option on where to pay.

Once the best option has been determined, a recommended due date is calculated S211 and compared S212 to the response due date of the Communication pursuant to Rule 71(3) EPC. A response to the Communication pursuant to Rule 71(3) EPC is then recommended to be filed S213 based on the comparison of the recommended due date and the response due date.

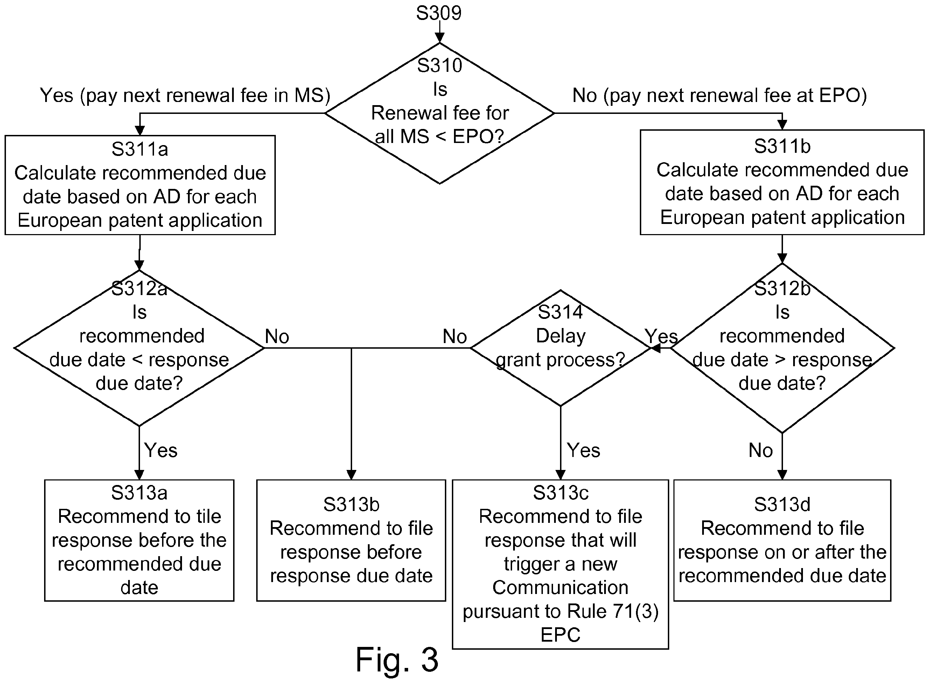

Figure 3 is a flow chart that illustrates aspects of the method steps S209-S213 of Fig. 2 in more detail. As stated above in relation to Fig. 2, the sum of the renewal fees for all selected MS is calculated for each European patent application. The sum of the renewal fees for all selected MS, for each European patent application, is then compared S309 with the next renewal fee for EPO. The best option of where to pay next is based on which alternative is the most inexpensive one. Thus, in step S310 the next renewal fee is payed at the patent offices of the selected MS if the cost for doing so is less than paying the next renewal fee at the EPO, and vice versa. With the best option determined, a recommended due date is calculated S311a, S311b based on AD for each European patent application. The recommended due date calculated in step S311a has to be early enough to ensure that the granted patent is published before the AD. The recommended due date calculated in step S311b has to be late enough to ensure that the granted patent is published after the AD.

As has been described above in relation to Fig. 1, the handling time at the EPO may typically vary between thirty-seven and forty-three days. In one embodiment, the recommended due date determined in step S311a is determined by subtracting at least forty-three days from the AD to ensure that the EPO has forty-three days to complete their preparations before the granted patent is published. In an alternative embodiment, thirty-seven days are subtracted S41 from the AD and the recommended due date is adjusted S42 to the previous Monday with respect to the date determined by subtracting thirty-seven days from the AD, thereby optimizing the process further.

Having determined S311a the recommended due date, the recommended due date is compared S312a to the response due date. If the recommended due date is before the response due date, the EPO will have enough time to complete their preparations before the granted patent is published if the response is filed before the recommended due date. Therefore, it is recommended S313a that a response to the Communication pursuant to Rule 71(3) EPC is filed before the recommended due date if the recommended due date is before the response due date. Otherwise, the response to the Communication pursuant to Rule 71(3) EPC is recommended S313b to be filed before the response due date of the Communication pursuant to Rule 71(3) EPC.

In analogy with step S311a, the recommended due date is determined in step S311b by subtracting less than thirty-seven days from the AD to ensure that the EPO will not complete their preparations to publish the granted patent before the AD. Alternatively, thirty-six days are subtracted S43 from the AD and the due date is adjusted S44 to the next Tuesday with respect to the date determined by subtracting thirty-six days from the AD, thereby optimizing the process further.

Having determined S311b the recommended due date, the recommended due date is compared S312b to the response due date. If the recommended due date is before the response due date, the EPO will not have enough time to complete their preparations before the granted patent is published if the response is filed on or after the recommended due date (but at the response due date at the latest). Thus, it is recommended S313d that a response is filed on or after the recommended due date (but at the response due date at the latest).

On the other hand, if the recommended due date is after the response due date, filing a response on the response due date may provide the EPO with sufficient time to complete their preparations. Therefore, a decision needs to be made S314 if the granting process should be delayed. If it is decided to delay the granting process, it is recommended in step S313c to file a response that will trigger a new Communication pursuant to Rule 71(3) EPC. The process may e.g., be delayed by filing a statement indicating disagreement of suggested amendments, description of prior art or even filing a request to correct misspellings etc. Also, it is desirable to file the delaying response as close to the Communication pursuant to Rule 71(3) EPC as possible.

## Claims

1. A method for resource optimization in information handling, the method comprising:
- obtaining (S10), from at least one data base, information relating to a set patent applications filed at a regional patent office that have received an allowed status within a selected time period, the obtained information, for each patent application, comprising an allowed date;
- calculating (S20), for each patent application, renewal fee costs for a set of options based on the obtained information and a set of countries selected to obtain patent protection in, wherein the set of options comprises a first option to pay renewal fees at the national patent offices in the selected set of countries and a second option to pay a renewal fee at a regional patent office;
- comparing (S30) the options with each other based on the calculated renewal fee costs;
- determining (S40) a date to perform actions based on the comparison of the options with each other.

2. The method according to claim 1, wherein calculating (S20) renewal fee costs comprises calculating (S21), for each patent application, a set of parameters based on the obtained information.

3. The method according to claim 2, wherein the set of parameters comprises a next anniversary date, AD, number of days from allowed date to the anniversary date and a response due date.

4. The method according to claim 2 or 3, wherein the set of parameters comprises a next renewal year for which renewal fees are due for the application.

5. The method according to claim 3 or 4, further comprising:
- determining (S22) the date to perform actions to be the response due date when the anniversary date is within a first time interval of the allowed date.

6. The method according to claim 4, wherein the first time interval is less than sixty days.

7. The method accord to claim 4 or 5, further comprising:
- comparing (S51) the determined date to perform actions and the response due date, and
- establishing (S52) an updated response due date based on the comparison.

8. The method according to claim 7, further comprising:
- determining (S53) a set of actions based on the updated response due date.

9. The method according to any of the preceding claims, wherein obtaining (S10) information further comprises:
- retrieving (S11) data from the at least one data base, the data comprising the information.

10. The method according to any of claims 3-9, wherein determining (S40) a date to perform actions further comprises:
- subtracting (S41) thirty-seven days from the AD, and
- adjusting (S42) the date to perform actions to be the previous Monday with respect to the date determined by subtracting thirty-seven days from the AD.

11. The method according to any of claims 3-9, wherein determining (S40) a date to perform actions further comprises:
- subtracting (S43) thirty-six days from the AD, and
- adjusting (S44) the date to perform actions to be the next Tuesday with respect to the date determined by subtracting thirty-six days from the AD.

12. A computer program comprising computer program code which, when executed, causes a computer arranged to be in communication with at least one data base, wherein the at least one data base comprises information relating to a set patent applications filed at a regional patent office that have received an allowed status within a selected time period, to execute the methods according to any of the claims 1-11.
